# EUROPEAN PATENT SPECIFICATION

(11) **EP 2 509 815 B1**
(45) Date of publication and mention of the grant of the patent: **12.07.2017**
(21) Application number: 10836284.9
(22) Date of filing: 02.12.2010
(51) Int. Cl.: B60K 15/077, F02M 37/02, F02M 37/00, B60K 15/03

(54) **ARRANGEMENT FOR FUEL SUPPLY TO AN ENGINE**
ANORDNUNG ZUR EINSPEISUNG VON KRAFTSTOFF IN EINEN MOTOR
AGENCEMENT POUR ALIMENTATION EN COMBUSTIBLE D'UN MOTEUR

(30) Priority: 08.12.2009 SE 0950946
(43) Date of publication of application: 17.10.2012
(73) Proprietor: Scania CV AB, 151 87 Södertälje (SE)
(72) Inventor: FAGERHOF, Henrik, S-144 44 Rönninge (SE)
(74) Representative: Scania CV AB
(86) International application number: PCT/SE2010/051330
(87) International publication number: WO 2011/071440

(56) References cited:
- EP-A1- 0 228 176
- EP-A1- 0 864 458
- WO-A1-02/38409
- WO-A1-2008/105721
- WO-A1-2008/105721
- GB-A- 2 274 435
- US-A1- 2009 178 653

## Description

### Technical field

The invention relates to an arrangement for transferring fuel from one or more secondary tanks to a main tank, according to the preamble of claim 1.

The invention also relates to a vehicle comprising said arrangement.

### Background

A large proportion of vehicles used for example to carry passengers and goods are powered by some kind of combustion engine in which a fuel in liquid form is converted to a necessary motion. The vehicle is therefore provided with one or more fuel tanks to hold sufficient fuel for a predetermined period of use of the vehicle.

Vehicles with high fuel consumption and/or for which long intervals between refuellings are desirable often have two or more fuel tanks situated at appropriate locations where there is space in the vehicle, to increase the total volume of fuel the vehicle can carry.

In existing fuel systems, each secondary tank is connected to a main tank from which fuel is supplied to the vehicle's engine. The respective tanks are connected to the main tank by a hose which extends between the bottom of the respective fuel tank and the bottom of the main tank, and the transfer of fuel takes place by siphon action which equalises the fuel levels in the tanks.

It has been found however that this fuel system configuration has significant shortcomings in that large quantities of fuel which splash around in the tanks are not transferred to the main tank, which means that large volumes of fuel cannot be used for the engine. Moreover, the volume of fuel which cannot be used means that the usable volume is also smaller and that the vehicle is constantly transporting an extra weight which increases its fuel consumption and the stress and wear on certain of its components.

In EP 0864 458 A1 a fuel system is disclosed which is arranged to transfer fuel from a secondary tank to a main tank comprising an ancillary space. Fuel is transferred from the ancillary space to a fuel consuming unit and surplus fuel is lead back to the main tank and the secondary tank in a return line divided into two secondary return lines. Pumping means working according to the venturi principle are used to transfer fuel from the secondary tank to the main tank and from the main tank to the ancillary space.

However, there is a need for an arrangement which ensures a more reliable transfer of fuel from the secondary tanks to an ancillary space in the main tank and thence to an engine.

### Summary of the invention

The object of the present invention is to eliminate the above problems. This object is achieved by an arrangement according to claim 1.

The problems described above are solved by the return flow from the fuel-consuming unit, usually a combustion engine, being led to the main tank via a return line which is divided into a number of secondary lines each fitted with a venturi tube. The venturi tube comprises a passage with reduced cross sectional area which thereby increases the velocity of the return flow through the passage. The increased flow velocity in the passage then induces in the transfer line a suction which can be utilised to transfer fuel from the secondary tank or secondary tanks to the main tank. This arrangement is very advantageous as it results in continuous and reliable transfer of the fuel without involving any moving parts which would require maintenance.

In one embodiment of the arrangement according to the invention the ancillary space in the main tank is a delineated space provided with drainage to return fuel from the ancillary space to the main tank when the ancillary space is overfilled. This embodiment increases the arrangement's reliability in that the ability to continuously drain fuel back from the ancillary space to the main tank prevents overfilling of the ancillary space which might otherwise result in leakage.

In one embodiment of the arrangement, the ancillary space is separated from the fuel tank by a wall which has an aperture situated in the upper part of the ancillary space and of the fuel tank. This embodiment represents a simple and reliable arrangement with continuous and guaranteed drainage of the ancillary space.

In one embodiment of the arrangement, each secondary tank and the main tank have a bottom surface in which the transfer line is connected. This transfer line connection means that almost all of the fuel in the tanks can be transferred to the ancillary space and then be used by the fuel-consuming unit. To further enhance the ability to transfer the fuel, the bottom surface may be configured to slope towards the transfer line connection.

In one embodiment of the arrangement, a drainage hose runs between the main tank and at least one secondary tank. This embodiment ensures that the main tank is not overfilled, which might otherwise occur when there is a large quantity of fuel in the arrangement's tanks.

In one embodiment of the arrangement, the main tank and the respective secondary tanks are arranged at substantially the same height, and a pipe extends from the connection of the drainage hose or drainage hoses in the bottom surface of the secondary tank or secondary tanks such that the mouth of the drainage hose is situated above the bottom surface. This form of drainage between the tanks has the advantage that as long as the fuel level in the main tank is above the mouth of the pipe in the secondary tank or secondary tanks, fuel continuously drains back from the main tank to the secondary tank or secondary tanks, but when the fuel level in the main tank is below the level of the mouth of the pipe, no further fuel will drain. This is very advantageous in that the fuel in the secondary tanks is thereby transferred to the main tank and can then be used for the fuel-consuming unit.

In one embodiment of it, the arrangement comprises a main tank and one secondary tank and the return line is divided into two secondary lines. This is a specific embodiment of the arrangement according to the invention. This arrangement results in reliable fuel transfer, as the return flow from the fuel-consuming unit is only used in two venturi tubes.

Arrangements according to any of the embodiments above may with advantage be used in other types of vehicle.

### Brief description of the drawings

The invention is explained in more detail below with reference to the drawings in which:
- Figure 1: illustrates a schematic flow diagram for an embodiment of an arrangement according to the invention, as seen from above
- Figure 2: illustrates a basic configuration of a venturi tube
- Figure 3: illustrates a cross sectional view of an embodiment of a secondary tank and a main tank which form part of the arrangement according to the invention.

### Detailed description of the invention

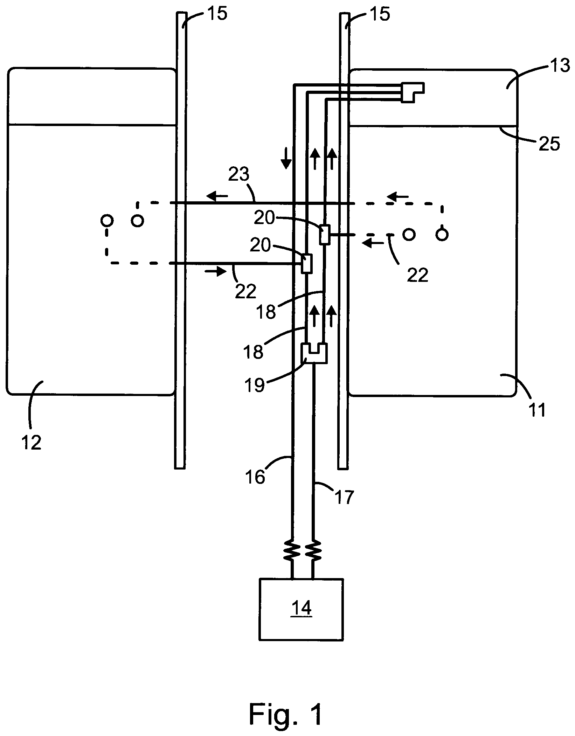

Figure 1 illustrates schematically the flow of the fuel in an embodiment of an arrangement for transferring fuel from a main fuel tank 11 and a secondary tank 12 to an ancillary space 13 arranged in the main tank 11. The flow of the fuel in the arrangement is illustrated in the drawing by arrows placed alongside the various pipes which form part of the arrangement.

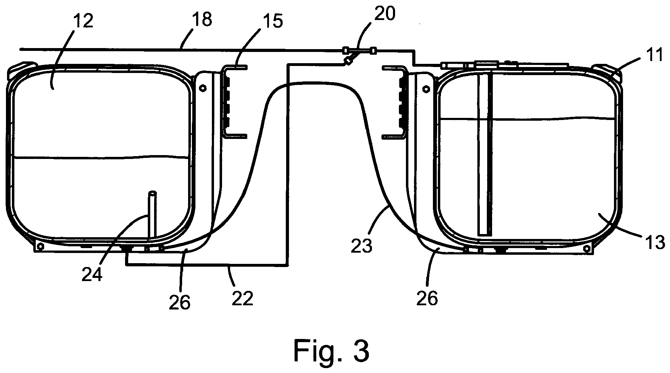

The fuel is transferred from the ancillary space 13 to a fuel-consuming unit 14 which may for example be a combustion engine. Both the main tank 11 and secondary tank 12 are suspended at substantially the same height on a framework 15, which may for example be a vehicle framework. The relationship between the respective heights at which the secondary tank and main tank are situated is important for the satisfactory functioning of the arrangement according to the invention. This relationship is illustrated schematically in Figure 3.

In the arrangement illustrated in Figure 1, fuel is transferred continuously from the ancillary space 13 to the fuel-consuming unit 14 via a fuel line 16 by a fuel pump, not shown, which is usually situated close to the fuel-consuming unit 14. To ensure that enough fuel is always available to the fuel-consuming unit, the pump is adapted to generate a fuel flow to the fuel-consuming unit 14 which is always greater than the latter's actual fuel consumption. This results in a certain quantity of fuel not being combusted in the unit. This unused surplus is returned to the ancillary space 13 via a return line 17.

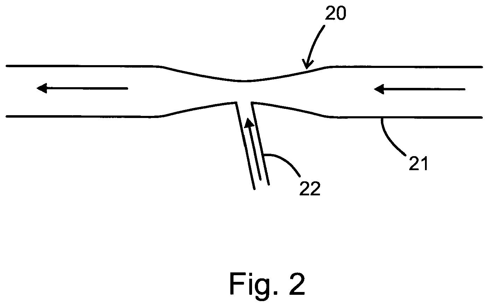

At an appropriate position 19 along it, the return line 17 divides into two, or in certain cases more, mutually parallel secondary return lines 18 each leading to the ancillary space 13. The number of secondary return lines 18 corresponds to the total number of tanks, comprising the secondary tanks 12 plus the main tank 11, which form part of the arrangement. In the present case, this means two secondary return lines. A venturi tube 20 is arranged along each secondary return line 18. The venturi tube 20 illustrated schematically in Figure 2 and described in more detail later in the description is used to transfer fuel from the main tank 11 and the secondary tank 12 to the ancillary space 13 in the main tank 11.

A transfer line 22 which extends from the bottom of the respective tank to any of the venturi tubes 20 is connected near the tank bottom or at the tank's lowest point to ensure that as much fuel as possible is transferred from the tank. Fuel tanks are usually provided with a bottom plug for cleaning out accumulated litter in them and for draining off any water present in them, and the existing aperture is with advantage used to connect the transfer line 22.

To further guide the contents of the tanks to the transfer line 22 in the bottom of the tank, the tank bottom may be provided with one or more surfaces sloping towards the outlet to guide all of the fuel in the tank to the mouth of the transfer line 22.

The quantity of fuel transferred from the main tank 11 and the secondary tank 12 to the ancillary space 13 is always greater than that consumed by the fuel-consuming unit 14, which means that when the arrangement is in use the fuel level in the ancillary space 13 will always be higher than the level in the main tank 11, ensuring a reliable supply of fuel from the ancillary space 13 to the unit 14. The fuel is drawn from the lower part of the ancillary space 13 to ensure that the inlet to the line 16 is always below the fuel level in the ancillary space 13, even if the latter is not completely full of fuel. The top edge of the ancillary space 13 is open to the main tank 11, so when the fuel level in the ancillary space 13 reaches the aperture, any surplus fuel will drain back to the main tank 11 by flowing over the edge of the boundary wall 25.

The ancillary space 13 constitutes only a small part of the main tank 11. The size of the ancillary space 13 in relation to the main tank 11 depends on the expected fuel requirement of the fuel-consuming unit 14 and on the volumes available for tanks.

When the fuel-consuming unit 14 is not being used and the relating systems are closed off, the fuel level in the ancillary space 13 drops until the respective surface levels in the main tank 11, the secondary tank 12 and the ancillary space 13 are equalised by siphon action through the connecting transfer line 22.

A venturi tube 20 and the flow through it during use are illustrated schematically in Figure 2. The venturi tube comprises a longitudinal passage 21, the cross-sectional area of which near the centre of the venturi tube is reduced relative to the cross-sectional area at the venturi tube's inlet and subsequently increases again to substantially the same as at the inlet. The reduction in cross-sectional area results in an increase in the flow velocity in this section of the passage 21, thereby inducing a suction in the transfer line 22 connected to the passage 21 near to the point where the cross-sectional area reaches its minimum.

Figure 3 illustrates a cross-sectional view through the arrangement in Figure 1 to illustrate the relationship between the respective heights at which the tanks are situated. The secondary tank 12 and the main tank 11, in which the section runs through the ancillary space 13, are each suspended on the framework 15 by suspension devices 26. Figure 3 illustrates conceivable fuel levels in the tanks during operation. The fuel is transferred continuously to the ancillary space 13, resulting in the higher fuel level in this space.

A drainage hose 23 runs between the bottom of the main tank and the bottom of the secondary tank to prevent the main tank 11 being overfilled. At the connection of the drainage hose 23 in the secondary tank 12, a pipe 24 is connected to the drainage hose 23 in such a way that the latter's mouth in the secondary tank 12 is moved slightly upwards from the bottom of the secondary tank. The purpose of this pipe 24 is to ensure that, as long as the fuel level in the main tank 11 is above the height at which the mouth of the pipe is situated, fuel will drain continuously from the main tank 11 to the secondary tank 12 via the drainage hose. However, if the fuel level in the main tank drops below the mouth of the pipe, no further fuel will drain back to the secondary tank 12 and all of the fuel in the secondary tank 12 will be transferred to the ancillary space 13 in the main tank 11. If for any reason the tanks 11 and 12 are arranged at different heights, the length of the pipe has then to be adjusted to ensure that the transfer takes place as intended. Figure 3 does not show all of the lines etc. which form part of the arrangement in Figure 1.

Although described above on the basis of some exemplifying embodiments, the invention is not limited thereto but is defined on the basis of the following claims.

## Claims

1. An arrangement for transferring fuel from one or more secondary tanks (12) to a main tank (11), which arrangement comprises:
- a main tank (11) comprising an ancillary space (13), both of them intended to contain fuel, which fuel is transferred from the ancillary space (13) to a fuel-consuming unit (14);
- one or more secondary tanks (12) intended to contain fuel;
- a venturi tube (20) situated close to the main tank (11) and each of the secondary tanks (12);
- a return line (17) intended to lead surplus fuel back from the fuel-consuming unit (14) to the main tank (11), which return line (17) is divided into as many secondary return lines (18) as the total number of tanks, comprising secondary tanks (12) and the main tank (11);
**characterised in that**
each secondary return line (18) lead to the ancillary space (13) and which transfer of fuel from the respective secondary tanks (12) and the main tank (11) to the ancillary space (13) takes place by means of venturi tubes (20) arranged along each secondary return line (18), and wherein the arrangement further comprises a transfer line (22) which extends from each of the secondary tanks (12) and the main tank (11) to any of the the venturi tubes (10), and that a drainage hose (23) runs between the bottom of the main tank (11) and the bottom of at least one secondary tank (12), whereby the transfer line (22) connects to the secondary return line (18) so that the return flow from the fuel-consuming unit (14) is used to transfer fuel, by means of the venturi tube (20), from the secondary tanks (12) and the main tank (11) to the ancillary space (13).

2. An arrangement according to claim 1, **characterised in that** the ancillary space (13) in the main tank (11) takes the form of a delineated space provided with drainage to return fuel from the ancillary space (13) to the main tank (11) when the ancillary space (13) is overfilled.

3. An arrangement according to claim 1 or 2, **characterised in that** the ancillary space (13) is separated from the main tank (11) by a wall (25) comprising an aperture situated in the upper part of the ancillary space (13) and of the main tank (11).

4. An arrangement according to claim 1 or 2, **characterised in that** each secondary tank (12) and the main tank (11) comprise a bottom surface in which a transfer line (22) is connected.

5. An arrangement according to any of the above claims , **characterised in that** the main tank (11) and the respective secondary tanks (12) are arranged at substantially the same height, and a pipe (24) extends from the connection of the drainage hose or drainage hoses (23) in the bottom surface of the secondary tank or secondary tanks (12) such that the mouth of the drainage hose (23) is situated above the bottom surface.

6. An arrangement according to any of the above claims, **characterised in that** the arrangement comprises a main tank (11) and a secondary tank (12) and that the return line (17) is divided into two secondary return lines (18).

7. A vehicle comprising at least one arrangement according to any of claims 1 to 6.

## Patentansprüche

1. Anordnung zum Übertragen von Kraftstoff von einem oder mehreren Sekundärtanks (12) zu einem Haupttank (11), wobei die Anordnung umfasst:
- einen Haupttank (11), der einen Zusatzraum (13) umfasst, wobei beide dazu vorgesehen sind, Kraftstoff aufzunehmen, wobei der Kraftstoff von dem Zusatzraum (13) zu einer Kraftstoff verbrauchenden Einheit (14) übertragen wird;
- einen oder mehrere Sekundärtanks (12), die zum Aufnehmen von Kraftstoff vorgesehen sind;
- ein Venturirohr (20), das nahe dem Haupttank (11) und nahe jedem der Sekundärtanks (12) angeordnet ist,
- eine Rückführleitung (17), die dazu vorgesehen ist, überflüssigen Kraftstoff zurück von der Kraftstoff verbrauchenden Einheit (14) zu dem Haupttank (11) zu führen, wobei die Rückführleitung (17) in so viele sekundäre Rückführleitungen (18) unterteilt ist, wie die gesamte Anzahl der Tanks, umfassend die Sekundärtanks (12) und den Haupttank (11);
**dadurch gekennzeichnet,**
**dass** jede sekundäre Rückführleitung (18) zu dem Zusatzraum (13) führt und das Übertragen von Kraftstoff von den jeweiligen Sekundärtanks (12) und dem Haupttank (11) zu dem Zusatzraum (13) mittels der Venturirohre (10) erfolgt, wobei die Anordnung ferner eine Übertragungsleitung (22) umfasst, die sich von jedem der Sekundärtanks (12) und dem Haupttank (11) zu einem der Venturirohre (10) erstreckt, und dass ein Abflussschlauch (23) zwischen dem Boden des Haupttanks (11) und dem Boden wenigstens eines Sekundärtanks (12) verläuft, wobei die Übertragungsleitung (22) mit der sekundären Rückführleitung (18) verbunden ist, sodass der Rückfluss von der Kraftstoff verbrauchenden Einheit (14) dazu verwendet wird, um Kraftstoff mittels des Venturirohrs (20) von den Sekundärtanks (12) und dem Haupttank (11) zu dem Zusatzraum (13) zu übertragen.

2. Anordnung nach Anspruch 1, **dadurch gekennzeichnet, dass** der Zusatzraum (13) in dem Haupttank (11) die Form eines abgegrenzten Raums annimmt, der mit einem Abfluss zum Rückführen von Kraftstoff von dem Zusatzraum (13) zu dem Haupttank (11) versehen ist, wenn der Zusatzraum (13) überfüllt ist.

3. Anordnung nach Anspruch 1 oder 2, **dadurch gekennzeichnet, dass** der Zusatzraum (13) von dem Haupttank (11) durch eine Wand (25) abgetrennt ist, die eine Öffnung aufweist, die in dem oberen Teil des Zusatzraums (13) und des Haupttanks (11) angeordnet ist.

4. Anordnung nach Anspruch 1 oder 2, **dadurch gekennzeichnet, dass** jeder Sekundärtank (12) und der Haupttank (F) eine Bodenfläche umfassen, in der eine Übertragungsleitung (22) angeschlossen ist.

5. Anordnung nach einem der vorangehenden Ansprüche, **dadurch gekennzeichnet, dass** der Haupttank (11) und die jeweiligen Sekundärtanks (12) auf im wesentlichen derselben Höhe angeordnet sind und dass sich ein Rohr (24) von der Verbindungsstelle des Abflussschlauchs oder der Abflussschläuche (23) in der Bodenfläche des Sekundärtanks oder der Sekundärtanks (12) derart erstreckt, dass die Mündung des Abflussschlauchs (23) oberhalb der Bodenfläche angeordnet ist.

6. Anordnung nach einem der vorangehenden Ansprüche, **dadurch gekennzeichnet, dass** die Anordnung einen Haupttank (11) und einen Sekundärtank (12) umfasst und dass die Rückführleitung (17) in zwei sekundäre Rückführleitungen (18) unterteilt ist.

7. Fahrzeug umfassend wenigstens eine Anordnung nach einem der Ansprüche 1-6.

## Revendications

1. Agencement pour transférer un carburant à partir d'un ou de plusieurs réservoirs secondaires (12) jusqu'à un réservoir principal (11), cet agencement comprenant :
- un réservoir principal (11) comprenant un espace auxiliaire (13), tous deux conçus pour contenir du carburant, ce carburant étant transféré de l'espace auxiliaire (13) à une unité consommant du carburant (14) ;
- un ou plusieurs réservoirs secondaires (12) conçus pour contenir du carburant ;
- un tube de venturi (20) situé à proximité du réservoir principal (11) et de chacun des réservoirs secondaires (12) ;
- une ligne de retour (17) conçue pour ramener un surplus de carburant de l'unité consommant du carburant (14) au réservoir principal (11), cette ligne de retour (17) étant divisée en un nombre de lignes de retour secondaires (18) égal au nombre total de réservoirs, comprenant les réservoirs secondaires (12) et le réservoir principal (11) ;
**caractérisé en ce que** :
chaque ligne de retour secondaire (18) mène à l'espace auxiliaire (13), et ce transfert de carburant à partir des réservoirs secondaires respectifs (12) et du réservoir principal (11) jusqu'à l'espace auxiliaire (13) s'effectue à l'aide de tubes de venturi (20) disposés le long de chaque ligne de retour secondaire (18), et l'agencement comprenant de plus une ligne de transfert (22) qui s'étend de chacun des réservoirs secondaires (12) et du réservoir principal (11) à l'un quelconque des tubes de venturi (10), et **en ce qu'**un tuyau de drainage (23) s'étend entre le fond du réservoir principal (11) et le fond d'au moins un réservoir secondaire (12), grâce à quoi la ligne de transfert (22) est reliée à la ligne de retour secondaire (18) de telle sorte que l'écoulement de retour à partir de l'unité consommant du carburant (14) est utilisée pour transférer du carburant, à l'aide du tube de venturi (20), des réservoirs secondaires (12) et du réservoir principal (11) à l'espace auxiliaire (13).

2. Agencement selon la revendication 1, **caractérisé en ce que** l'espace auxiliaire (13) dans le réservoir principal (11) prend la forme d'un espace délimité muni d'un drainage pour renvoyer du carburant de l'espace auxiliaire (13) au réservoir principal (11) lorsque l'espace auxiliaire (13) est trop rempli.

3. Agencement selon la revendication 1 ou 2, **caractérisé en ce que** l'espace auxiliaire (13) est séparé du réservoir principal (11) par une paroi (25) comprenant une ouverture située dans la partie supérieure de l'espace auxiliaire (13) et du réservoir principal (11).

4. Agencement selon la revendication 1 ou 2, **caractérisé en ce que** chaque réservoir secondaire (12) et le réservoir principal (11) comprennent une surface inférieure dans laquelle est reliée une ligne de transfert (22).

5. Agencement selon l'une quelconque des revendications précédentes, **caractérisé en ce que** le réservoir principal (11) et les réservoirs secondaires respectifs (12) sont disposés sensiblement à la même hauteur, et **en ce qu'**un tuyau (24) s'étend à partir de la liaison du tuyau de drainage ou des tuyaux de drainage (23) dans la surface inférieure du réservoir secondaire ou des réservoirs secondaires (12) de telle sorte que l'embouchure du tuyau de drainage (23) est située au-dessus de la surface inférieure.

6. Agencement selon l'une quelconque des revendications précédentes, **caractérisé en ce que** l'agencement comprend un réservoir principal (11) et un réservoir secondaire (12), et **en ce que** la ligne de retour (17) est divisée en deux lignes de retour secondaires (18).

7. Véhicule comprenant au moins un agencement selon l'une quelconque des revendications 1 à 6.
